# EUROPEAN PATENT SPECIFICATION

(11) **EP 4 232 726 B1**
(45) Date of publication and mention of the grant of the patent: **06.05.2026**
(21) Application number: 21882347.4
(22) Date of filing: 20.10.2021
(51) Int. Cl.: B62M 7/02, B62M 9/06, F16H 57/031

(54) **A POWER TRANSMISSION LAYOUT FOR A SADDLE TYPE VEHICLE**
LEISTUNGSÜBERTRAGUNGSANORDNUNG FÜR EIN SATTELFAHRZEUG
AGENCEMENT DE TRANSMISSION DE PUISSANCE POUR UN VÉHICULE DE TYPE À SELLE

(30) Priority: 24.10.2020 IN 202041046462
(43) Date of publication of application: 30.08.2023
(73) Proprietor: TVS Motor Company Limited, 600006 Chennai (IN)
(72) Inventor: SHASHANKA, P Gajjarahalli, Chennai (IN); P, Kumaresan, Chennai (IN); SUMITH, Joseph, Chennai (IN); MOHAN, Umate, Chennai (IN)
(74) Representative: Patentanwaltskanzlei Matschnig & Forsthuber OG
(86) International application number: PCT/IN2021/050999
(87) International publication number: WO 2022/085027

(56) References cited:
- JP-A- 2005 098 303
- JP-A- 2008 195 245
- JP-A- 2009 019 705
- JP-A- H03 271 090
- US-A- 4 723 619
- US-A1- 2011 233 022

## Description

### TECHNICAL FIELD

The present invention relates generally to a saddle type vehicle and more particularly, to a power transmission layout for the saddle type vehicle

### BACKGROUND

Generally, in saddle type vehicles, IC engines are used as a power source and the generated power is transferred to a rear wheel for traction through a transmission system. The transmission unit includes a plurality of components to connect a crankshaft of the IC engine to the wheel and transmits power by changing the ratio between the crankshaft rotational speed and the rotational speed of a wheel to provide speed as well as torque conversions of the saddle type vehicles. Regular geared transmission system requires rider of the saddle type vehicles to manually perform gearshifts. Whereas, CVT based transmission systems eliminates the need of performing manual gearshifts by providing automatic change in gear ratios between the crankshaft rotational speed and the rotational speed of the wheel. The CVT system comprises a front pulley operably attached to the crankshaft housed in a crankcase, a rear pulley operably connected to the wheel and a belt rests between them, all of which are enclosed within a crankcase of the IC engine. The front pulley comprises a variator mechanism and the rear pulley comprises a centrifugal clutch. Different gear ratios are obtained by changing the effective diameter of the front pulley and the rear pulley while the belt is engaged on the front pully and the rear pully.

In the saddle type vehicle layouts, the CVT system is disposed on effectively one side of the saddle type vehicles, mainly on left hand side, an exhaust system on right hand side, and the IC engine is disposed between the CVT system and the exhaust system. In such layout when the CVT system is disposed adjacent to the crankcase housing the crankshaft, the left-hand side of the system becomes bulky. For overall vehicle balance and dynamic stability in the saddle type two-wheeler, wherein the crankcase also acts as a swing arm, and is surmounted by the rear wheel, the center of gravity point of the engine needs to lie on or near to the Rear wheel's center plane disposed perpendicular to the axis of wheel rotation.

However, generally in the scooter engines surmounted by the rear wheel, the engine's mass distribution is more skewed towards one side of the vehicle due to placement of crankcase, and CVT system on the same side. Engine is one of the major contributors to the vehicle in terms of the overall vehicle weight. Hence, achieving the engine mass distribution to be more centred towards the rear wheel center plane becomes important from vehicle's "Body balance" perspective. Also, when redistributing the engine parts' location to achieve the balance between the vehicle RH side and LH side, the overall width of the engine is difficult to be contained within narrow limits.

JP H03 271090 A discloses the preamble of claim 1.

### BRIEF DESCRIPTION OF THE DRAWINGS

The detailed description is described with reference to a saddle type saddle type vehicle along with the accompanying figures. The same numbers are used throughout the drawings to reference like features and components.
Fig. 1 illustrates the side view of a saddle type vehicle employing an embodiment of the present subject matter.
Fig. 2 illustrates a top view of the power transmission system with the air intake structure according to the embodiment of the present subject matter.
Fig. 3a, and 3b illustrates a top cut section of the engine and the transmission unit of the power transmission unit according to the embodiment of the present subject matter.
Fig. 4 illustrates an exploded view of an outer casing of the transmission unit according to the embodiment of the present subject matter.

### DETAILED DESCRIPTION

In current times automobile customers are demanding high efficiency, compact and lighter vehicle and appealing visual requirement, which has increased the competition in automotive sector. In addition, with growing environmental concern, emission requirements are getting more and more stringent. Due to mentioned requirements, new technologies and mechanisms are being explored constantly. Generally, heavier the vehicle is, more energy it needs for traction and results in lower efficiency. Heavier vehicles have greater inertia and greater rolling resistance, both of which contribute to an increased fuel consumption. Further, reducing vehicle weight is a very effective way to improve a vehicle's efficiency.

Vehicle weight and engine power are two of the most important parameters that influence a vehicle's fuel consumption and carbon dioxide emissions. Weight reduction of the vehicle, yields benefit in fuel economy by virtue of reduction in load carried by the vehicle. Generally, known arts are achieving weight reduction by substituting lighter materials, such as aluminum and advanced composites, as well as making vehicle design changes.

However, the use of lighter materials poses issues such as durability and strength reduction of the components. Therefore, there is a need for reducing the vehicle weight which could reduce fuel consumption, with no sacrifice in the vehicle safety, life and performance attributes. Also, there is a need for finding improvements which enable additional weight reductions using other vehicle components which can be made smaller. Thus, requirement of building a compact power train with no sacrifice in performance is one of the objectives of the present invention.

In some scenarios, weight of a muffler unit of an exhaust unit can be reduced, which results in overall weight reduction of the vehicle and helps in reduced carbon dioxide emissions. However, in doing so center of gravity (CG) of the vehicle is greatly shifted towards the opposite side, as multiple heavy components are disposed thereat. In common packaging of the vehicle, right side is provided with the muffler and the left side is provided with a transmission assembly and a crankcase of the engine. In saddle type two-wheeled vehicles, right side is provided with the muffler and left side has the crankcase, and CVT system on the same side.

The CVT system comprises the front pulley operably attached to the crankshaft housed in the crankcase, the rear pulley operably connected to the wheel and the belt rests between them, enclosed within the crankcase of the IC engine. The front pulley comprises the variator mechanism and the rear pulley comprises the centrifugal clutch. The variator mechanism is covered with a cover variator which also has a provision for a kick starter system. The cover variator is made of metal in order to ensure sufficient strength to bear forces during torque transmission and use of the kick start operation. Due to use of a metal cover variator, the vehicle weight on a specific side increases undesirably and if components on the other side are lighter, then the CG may shift towards the heavier side of the vehicle, which is not preferable for vehicle movement as shift in CG results in skewing of the vehicle towards one side due to CG displacement. Sometimes, for weight reduction, polymer based raw materials are used but it results in compromise with the strength required to compensate forces generated during kick force.

In addition to the vehicle weight, there are various factors which affect the vehicle performance, for instance the center of gravity (CG) of the vehicle, height, wheel base length. Generally, in the saddle type two-wheeler the crankcase acts as a swing arm surmounted by the rear wheel. For overall vehicle balance and dynamic stability in such a saddle type two-wheeler the Center of gravity (CG) point of the engine needs to lie on or near to a rear wheel's center plane disposed perpendicular to the axis of wheel rotation. The location of center of gravity (CG) on the vehicle determines the stability of the vehicle. Dynamic stability of vehicles is a major concern during manufacturing, as this determines how safe a vehicle will be on the road, to passengers and other road users. A shift in the position of CG could in effect determine the handling characteristics of a vehicle, such as understeer, oversteer, and neutral steer which define the stability of the vehicle during its dynamics. Therefore, there is a need for an improved engine system layout design which enables compact layout of vehicle with desirable CG location to overcome all above cited problems and other problems of known art.

In order to solve one or more of the above mentioned and related problems, main objective of the present invention is to provide a power transmission system for a saddle type vehicle which enables a desired disposition of the CG of the vehicle and improved dynamic behaviour. As per an aspect of the present invention, a power transmission system is configured to include an engine and the transmission unit. The engine is configured to generate power for traction. At least a portion of the engine is disposed in a crankcase. The transmission unit is coupled with the at least a portion of the engine disposed in the crankcase. The transmission unit comprises an outer casing disposed aligned to the crankcase. The outer casing is designed with a plurality of covers detachably attached to form the outer casing.

As per an aspect of the present invention, the plurality of covers including a first cover and a second cover forming a split or modular outer casing. The first cover is configured to cover one or more components of the transmission unit and the second cover is configured to mount a kick starter assembly coupled to at least a portion of the engine disposed in the crankcase.

The first cover includes a mounting space to accommodate the second cover. An inner surface of the first cover includes a laterally inward extending projection surrounding the mounting space. The inward extending projection comprises of one or more mounting means facilitating mounting of the second cover with the first cover.

The first cover and the second cover include co-axially aligned openings which are further co-axially aligned with a kickstarting drive means of the kick starter assembly. The kickstarting drive means passes through both the openings and gets connected with a kick start lever for facilitating user operation. The opening being provided on the second cover, the opening is configured to accommodate one end of the kick starter lever.

The second cover includes a first housing space to house the kickstarting drive means, and a second housing space to house a kickstarting driven means. During kickstarting, the kickstarting driven means gets coupled to at least a portion of the crankshaft of the engine. A central axis of the kickstarting driven means is coaxial and parallel to an axis of the crankshaft. The torque generated during kickstarted being transferred from the central axis of the kickstarting driven means to the central axis of the crankshaft such that a reaction torque being transferred to the second cover facilitating elimination of direct stress transfer on the first cover.

The first cover includes an outer periphery, the outer periphery includes at least one air channel formed at-least at one location, which is configured to facilitate air circulation within the transmission unit. Said at least one air channel is formed by at least a portion of the crankcase and at least a portion of the outer casing. For reduced weight of the transmission unit, the first cover is made of resin material and the second cover is made of metal.

It is another objective of the present invention to provide the engine packaging to dispose the CG of the vehicle on the opposite side of the transmission unit and / or dispose the CG in close proximity to the longitudinal central plane of the vehicle. As per an aspect of the present invention, the engine includes an ISG and an oil pump disposed on an opposite side of the transmission unit to balance the weight on the opposite side of the transmission unit. The ISG is mounted directly on at least a portion of the crankcase, so that the all loads and forces associated with the ISG are directly transferred to the crankcase leading to reduced vibrations and can be mounted with minimal mounting provisions. The oil pump is provided with an exclusive oil pump cover, which is of the size just sufficient enough to cover the oil pump and not extended to any other part disposed in proximity, in order to reduce the size and weight of the oil pump cover.

As per another aspect of the present invention, the transmission unit with a resin drain pipe is configured to facilitate one-way flow of the water accumulated in the transmission unit. A breather circuit is disposed on a cylinder head cover. A fan housing is disposed directly on at least a part of crankcase in close proximity of the ISG.

The present invention along with all the accompanying embodiments and their other advantages would be described in greater detail in conjunction with the figures in the following paragraphs. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

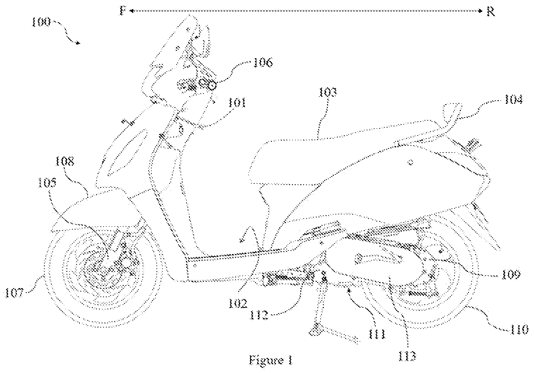

Fig. 1 illustrates the two-wheeled vehicle (hereinafter 'vehicle') (100) in accordance with one embodiment of the present invention. The vehicle 100 comprises of a frame (101-hidden under vehicle panels) which is conventionally an underbone chassis frame which provides a generally open central area to permit "step-through" mounting by a rider. Typically, the frame (101) assembly comprises of a head tube (not shown), a main tube (not shown), and a pair of side tubes (not shown). The vehicle (100) extends from a front portion (F) to a rear portion (R) in a longitudinal axis. The head tube (not shown) is disposed towards the front portion (F), and the main tube (not shown) extends downwardly and rearwardly from the head tube (not shown) forming a flat horizontal step-through portion (102). The pair of side-tubes (not shown) extend rearwardly from the other end of the main tube and support vehicular attachments such as a seat (103), fuel tank assembly (not shown), a utility box (not shown) and a pillion hand rest

(104). The head tube (not shown) supports a steering tube (not shown) and further connected to a front suspension system (105) at the lower end. A handlebar support member (not shown) is connected to an upper end of the steering tube (not shown) and supports a handlebar assembly (106). In the shown embodiment, the front suspension system (105) (only one is shown) is a telescopic suspension system, and supports a front wheel (107). The upper portion of the front wheel (107) is covered by a front fender (108) mounted to the lower portion of the steering tube (not shown). A front brake (not shown) and a rear brake (109) is arranged on the front wheel (107) and a rear wheel (110) respectively. The rear wheel (110) is supported towards the rear side of the frame (101) by a power transmission unit (111), which is horizontally coupled swingably to the rear of the frame (101) of the vehicle (100) through a rear suspension system (not shown). The power transmission unit (111) transfers the drive directly to the rear wheel (110) as it is coupled directly to it. The power transmission unit (111) includes an Internal Combustion engine (112) coupled to a transmission system (113). In the present embodiment, the transmission unit (113) is a continuously variable transmission (hereinafter CVT) system. The transmission unit (113) is disposed leftward of the IC engine assembly (112) in the vehicle width direction.

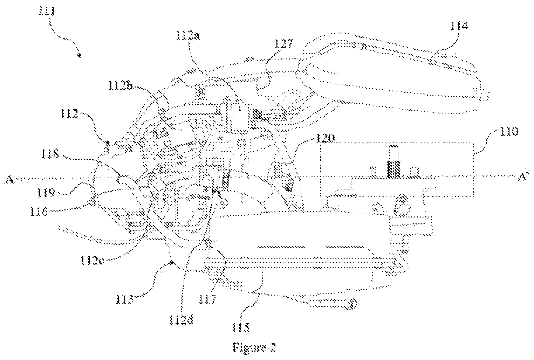

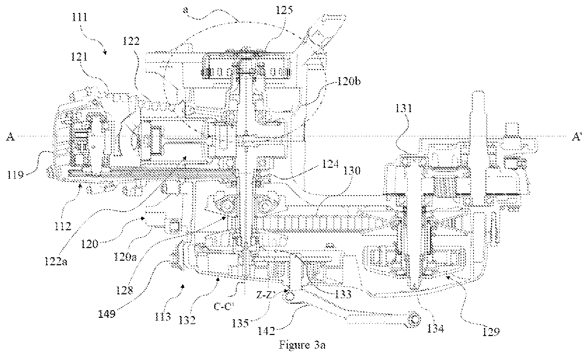

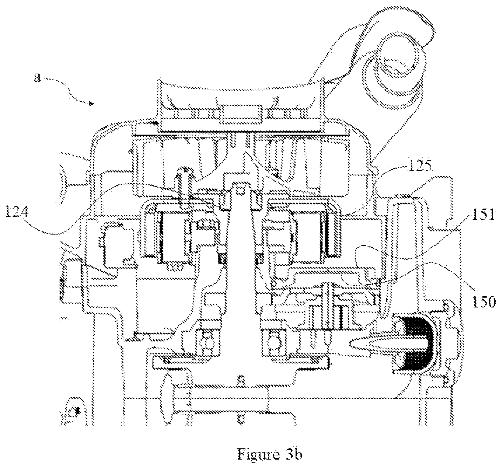

Figure 2 depicts a perspective view of the engine assembly on the vehicle with many parts omitted for clarity. Figure 3a, 3b shows an enlarged cut section top view of the power transmission system (111). The power transmission system (111) includes the engine assembly (112) disposed along a center axis (A-A') of the vehicle (100). The center axis (A-A') is defined as a longitudinal axis passing through the vehicle (100), running substantially coplanar to longitudinal central planes of the front wheel (107) and the rear wheel (110). The engine assembly (112) is coupled with the transmission unit (113) on a left side of the vehicle and is connected to an exhaust unit (114) of the vehicle (110). An air cleaner (115) is disposed on the left side of the vehicle (100), above the transmission unit (113). The air cleaner (115) is connected to the engine assembly (112) through a breather hose (116). One end (117) of the breather hose (116) is connected to the air cleaner (115) and other end (118) of the breather hose (116) is disposed on a cylinder head cover (119) of the engine (112). In the existing systems, the breather hose (116) is connected in proximity to a chain layout (not shown) and a chain cover (not shown) is employed to cover both the breather hose and the chain layout, resulting in a bulky cover. In the present subject matter, the breather hose (116) is connected to the cylinder head cover (119), therefore the size of the chain cover is reduced and made sufficient enough to cover only the chain layout.

At least a portion of the engine is disposed inside a crankcase (120). The crankcase (120) includes a left-side crankcase (120a) and a right-side crankcase (120b) collectively forming a space to house the engine (112). The air cleaner (115) is mounted on the left side crankcase (120a).

The engine (112) of the power transmission unit (111) includes a cylinder head (121) and a cylinder block (122). The cylinder head (121) and the cylinder block (122) are detachably attached to form a combustion chamber (122a) for combustion of the inlet fuel. A piston (123) is disposed inside the combustion chamber (122a) and is coupled to a crankshaft (124). The crankshaft (124), disposed inside the crankcase (120), is coupled to a generator (125) on one lateral end portion and to the transmission unit (113) on the other lateral end portion. Initially, the generator (125) rotates the crankshaft (124), which is coupled to the piston (123) which moves inside the combustion chamber (122a) to create a required pressure of the fuel to initiate the ignition and to start the combustion of the fuel. Once the combustion starts, the piston (123) continuously moves to rotate the crankshaft (124) with the power generated in the combustion process. In the preferred present embodiment, the generator (125) is an integrated starter generator (hereinafter ISG) (125). Use of ISG (125) as engine starting system, results in eliminating components such as starter motor (not shown) and related elements and therefore helps to reduce part count on the left-side crankcase (120a) and reduce weight for balancing CG of the vehicle (100). Additionally, the ISG (125) is disposed inside the right-side crankcase (124) with a direct mounting (not shown) provided on the right-side crankcase (120b) to balance out the weight on the right side of the vehicle (100). Direct mounting of the ISG (125) ensures that the weight of the ISG (125) is directly taken by the crankcase (120) and additional conventional mounting provisions required in an oil pump cover (151) can be reduced to a size sufficient enough for covering an oil pump (150) disposed on the same side of said ISG (125). In the preferred embodiment, by mounting the oil pump (150) on the right-side crankcase (120b) with a smaller oil pump cover (151), the part count and the weight from the left-side crankcase (120a) is reduced to balance out the CG of the vehicle (100).

A fan housing (127) is disposed directly on at least a part of crankcase (120) in proximity of the ISG (125). The fan housing (127) is disposed on an outer surface of the crankcase (120). The fan housing (127) is configured to accommodate a fan (not shown) that draws air from outside for cooling the engine (112). The fan housing (127) is provided with one or more provisions to mount at least one secondary air injection unit (SAI) (112a)), Ignition coil (112b)). In an embodiment, E-SAI (112a) is held rigidly by a rubber boot snapped on to a flat vertical plate like structure built on the fan housing (127). In an embodiment, the ignition coil (112b) is fastened on the fan housing (127) on a plurality of mounting bosses provided in proximity of an intake pipe (112c) and a throttle body (112d)).

The transmission unit (113) is mounted on the left-side crankcase (120a). The transmission unit (113) includes a drive assembly (128) coupled with the crankshaft (124) on one side, and a driven assembly (129) coupled to a gear unit (130) on the other side. The drive assembly (128) and the driven assembly (129) are connected through a drive belt (130) configured to transfer drive force from the drive assembly (128) to the driven assembly (129). The gear unit (131) coupled with the driven assembly (129) transfers the drive force from the transmission unit (113) to the rear wheel (110). Outer side of the transmission unit (113) is covered by an outer casing (132). The outer casing (132) is disposed aligned to the left-side crankcase (120a) in order to form a closed housing to house the transmission assembly. The transmission unit (113) also includes a resin drain pipe (149) configured to facilitate one-way flow of the water accumulated in the transmission unit (113).

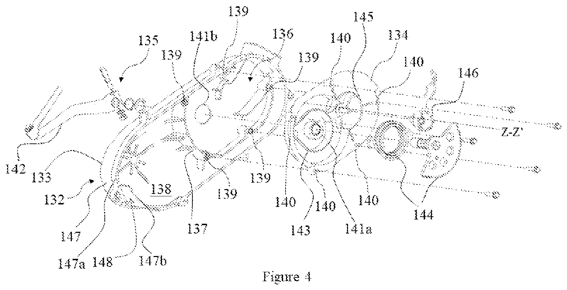

Fig. 4 depicts an exploded view of the outer casing (132) along with few peripheral parts for brevity. The outer casing (132) includes a plurality of covers (133, 134). the plurality of covers includes a first cover (133) and a second cover (134). The first cover (133) and the second cover (134) are detachably attached to form a split or a modular casing. The first cover (133) is configured to cover one or more components of the transmission unit (113). The first cover (133) mainly covers the drive assembly (128), the driven assembly (129) and the drive belt (130).

The second cover (134) is configured to mount a kick starter assembly (135). In a preferred embodiment, the kick starter assembly includes a kick starter lever (142), a kickstarting drive means (144), and a kickstarting driven means (146). In the present subject matter, the kick starter assembly (135) is provided as an optional backup starting option. In an embodiment, where no optional backup starting option is provided the second cover (134) is a resin part configured to facilitate air routing within the transmission unit (113).

The kick starter assembly (135) is coupled to the at least a portion of the crankshaft (124) of the engine (112) disposed in the crankcase (120), to start the engine (112). The kick starter assembly (135) is configured to rotate the crankshaft (124) for ignition during manual starting situations. In a preferred embodiment, the kick starter assembly (135) is a single step kick starter. In the present construction, the outer casing (132) can be modified to provide a vehicle with or without the kick starter assembly (135), without any design changes required in the outer casing (132) of the transmission unit (113). According to the invention, the first cover (133) is made of resin material and the second cover (134) is made of metal to reduce the weight of the transmission unit (113). In the present construction, the second cover (134) which is made of metal, takes the direct force generated during kick starting and transfers resultant force on the first cover (133) made of resin thereby fulfilling the strength requirement.

The first cover (133) includes a mounting space (136) to accommodate the second cover (134). An inward extending projection (137) on an inner surface (138) of the first cover (133) surrounds the mounting space (136) to form a mounting support for attaching the second cover (134). The mounting space (136) is formed by the inner surface (138) of the outer casing (132) and the inward extending projection (137) extending on the inner surface. The inward extending projection (137) defines periphery of the mounting space (136). The second cover (134) is disposed on inner side of the outer casing (132). The inward extending projection (137) includes one or more mounting means (139). In a preferred embodiment, each of the one or more mounting means (139) are disposed equidistant from each other. In an embodiment, the one or more mounting means (139) are holes defined for a screw mounting, however in another embodiment the one or more mounting means (139) may be snap fit type or a combination thereof. The second cover (134) is provided with corresponding number of second mounting points (140). The second mounting points (140) are configured to be disposed aligned with the one or more mounting means (139). The second cover (134) is attached with the first cover (133) at multiple points in order to transfer only the resultant kick start actuation force to the first cover (133) after absorbing the major force produced during kick starting. The one or more mounting means (139) facilitates distribution of the force across the entire inward extending projection (137), thereby reduces the overall stress impact. As a result of this design, the heavier mass of the metal cover (134) is disposed closer to the longitudinal central plane of the vehicle thereby enabling the CG to be moved closer to the longitudinal central plane of the vehicle which is desirable. The outer cover (133) which is much larger is size, is now enabled to be made of a lighter material other than metal thereby significantly reducing the lateral offset distribution of a heavier mass away from the longitudinal central plane of the vehicle.

The second cover (134) is provided with an opening (141a) to accommodate one end of the kick starter lever (142), a first housing space (143) to house a kickstarting drive means (144), and a second housing space (145) to house a kickstarting driven means (146). The kickstarting drive means (144) is coupled to the kick starter lever (142) on one end, and to the kickstarting driven means (146) on the other end. The kickstarting driven means (146) is coupled to the crankshaft (124) of the engine (112) through a coupling means preferably a ratchet mechanism to transfer the torque generated during kick starting operation. During kickstarting, the kickstarting driven means (146) gets coupled to the at least a portion of the crankshaft (124). A central axis (ZZ') of the kickstarting driven means (146) is coaxial and parallel to an axis (CC') of the crankshaft.

The opening (141a) of the second cover is aligned to an opening (141b) provided on the first cover (133), such that the kickstarting drive means (144) passes through both the openings (141a, 141b) and gets connected with one part of the kick start lever (142) for facilitating user operation.

In operation torque generated during kickstarting operation is transferred from the central axis (ZZ') of the kickstarting driven means (146) to the central axis (CC') of the crankshaft (124) such that a reaction torque is transferred to the second cover (134) facilitating elimination of stress on the first cover (133).

Further, the first cover (133) includes an outer periphery wall (147) formed by a projection extending in a rearward lateral direction from outermost ends of the inner surface (138) of the first cover (133). The outer periphery wall (147) includes a first portion (147a) and a second portion (147b) overlapping to leave a space between the two to form at least one air passage (148) formed at-least at one location, configured to facilitate air circulation within the transmission unit (113). A corresponding portion aligned to the at least one air passage (148) is formed on the crankcase (120) to increase a lateral width for increased air circulation , resulting in material elimination at this location for weight reduction and for increasing lateral extension of said at least one air passage (148) to the left side of the crankcase (120) for scavenging of hot air from the transmission unit (113). In a preferred embodiment, the transmission unit (113) includes CVT transmission and hot air from the CVT chamber exits from said at least one air passage (148), thus resulting in improved transmission cooling.

Many modifications and variations of the present subject matter are possible in the light of the above disclosure without departing from the scope defined by the appended claims.

### List of reference numerals:

- 100: Vehicle
- F: Front portion of 100
- R: Rear portion of 100
- A-A': Longitudinal Center axis of 100
- 101: Frame of 100
- 102: Step through portion of 100
- 103: Seat of 100
- 104: Pillion hand rest of 100
- 105: Front suspension system of 100
- 106: Handle bar assembly of 100
- 107: Front wheel of 100
- 108: Front fender of 100
- 109: Rear brake of 100
- 110: Rear wheel of 100
- 111: Power transmission system of 100
- 112: Engine of 111
- 112a: Secondary Air Injection unit of 112
- 112b: Ignition Coil of 112
- 112c: Throttle unit of 112
- 112d: Intake pipe of 112
- 113: Transmission unit of 111
- 114: Exhaust unit of 111
- 115: Air Cleaner of 115
- 116: Breather hose of 115
- 117: One end of 116
- 118: Other end of 116
- 119: Cylinder head cover of 112
- 120: Crankcase of 112
- 120a: Left Crankcase of 112
- 120b: Right Crankcase of 112
- 121: Cylinder head of 112
- 122: Cylinder block of 112
- 122a: Combustion chamber of 112
- 123: Piston of 112
- 124: Crankshaft of 112
- C-C': Central axis 124
- 125: Generator of 112
- 127: Fan housing of 112
- 128: Drive assembly of 113
- 129: Driven assembly of 113
- 130: Drive Belt of 113
- 131: Gear Unit of 113
- 132: Outer casing of 113
- 133: First Cover of 132
- 134: Second cover of 132
- 135: Kick Starter assembly disposed in 134
- 136: Mounting space for 134 in 133
- 137: Projection on 133
- 138: Inner-surface on 133
- 139: One or more mounting means on 137
- 140: Mounting points on 134
- 141a: Opening on 134
- 141b: Opening on 133
- 142: Kick starter lever
- 143: First housing groove in 134
- 144: Drive means of 135 disposed in 143
- 145: Second housing groove in 134
- 146: Driven means of 135 disposed in 145
- Z-Z': Central axis of 146
- 147: Outer Periphery Wall of 134
- 147a: First Portion of 147
- 147b: Second Portion of 147
- 148: Air passage in 132
- 149: Drain Pipe
- 150: Oil Pump
- 151: Oil Pump Cover

## Claims

1. A power transmission system (111) for a saddle type vehicle (100), the power transmission system (111) comprising:
a transmission unit (113) comprising an outer casing (132) disposed aligned to a crankcase (120);
wherein the outer casing (132) is configured with a plurality of covers (133, 134) detachably attached to form the outer casing (132), and
the plurality of covers (133, 134) comprising a first cover (133), and a second cover (134), the first cover (133) being configured to cover one or more components of the transmission unit (113) and the second cover (134) being configured to mount a kick starter assembly (135),
wherein the first cover (133) comprising a mounting space (136) to accommodate the second cover (134), an inner surface (138) of the first cover (133) comprising a laterally inward extending projection (137) surrounding the mounting space (138), the inward extending projection (137) comprising one or more mounting means (139) facilitating mounting of the second cover (134) with the first cover (133), and
wherein the second cover (134) is adapted to receive a direct force from the kick starter assembly generated during kick starting, (133) , **characterized in that** the first cover (133) is made up of a resin material, and the second cover (134) is made up of metal, the second cover (134) adapted to transfer a resultant force on the first cover (133).

2. The power transmission system (111), as claimed in claim 1, wherein the power transmission system comprising an engine (112) configured to generate power for traction, at least a portion of the engine (112) being disposed in a crankcase (120); and the kick starter assembly being coupled to the at least a portion of the engine (112) disposed in the crankcase (120).

3. The power transmission system (111), as claimed in claim 1, wherein the first cover (133) comprises an outer periphery wall (147), the outer periphery wall (147) comprising:
a first portion (147a) and a second portion (147b) configured to overlap to leave a space in between defining at least one air passage (148) formed at-least at one location, wherein the at least one air passage (148) being configured to facilitate air flow within the transmission unit (113) and, wherein at least a corresponding portion aligned to the at least one air passage (148) being formed on the crankcase (120) to increase a lateral width for increased air circulation.

4. The power transmission system (111), as claimed in claim 1, wherein the first cover (133) and the second cover (134) comprising co-axially aligned openings (141a, 141b), co-axially aligned with a kickstarting drive means (144) of the kick starter assembly (135) which passes through both the openings (141a, 141b) and gets connected with a kick start lever (142) for facilitating user operation.

5. The power transmission system (111), as claimed in claim 4, wherein the opening (141a) being provided on the second cover (134), the opening (141a) being configured to accommodate one end of the kick starter lever (142).

6. The power transmission system (111), as claimed in claim 4, wherein the second cover (134) comprising a first housing space (143) to house the kickstarting drive means (144), and a second housing space (145) to house a kickstarting driven means (146).

7. The power transmission system (111), as claimed in claim 6,
wherein the kickstarting driven means (146) being coupled to at least a portion of a crankshaft of the engine (112), and a central axis (ZZ') of the kickstarting driven means (146) being coaxial and parallel to an axis of the crankshaft (CC'); and,
wherein torque generated during kickstarted being transferred from the central axis (Z-Z') of the kickstarting driven means (146) to the central axis (C-C') of the crankshaft (124) such that a reaction torque being transferred to the second cover (134) facilitating elimination of direct stress transfer on the first cover (133).

8. The power transmission system (111), as claimed in claim 1, wherein the transmission unit (113) comprises a resin drain pipe (149) configured to facilitate one-way flow of the water accumulated in the transmission unit (113).

9. The power transmission system (111) as claimed in claim 1, the power transmission system (111) comprising an engine (112), and a transmission unit (113); the engine (112) comprising:
a crankcase (120);
an integrated starter-generator (125);
an oil pump (150); and
an oil pump cover (151);
wherein the integrated starter-generator (125) being mounted directly on at least a portion of the crankcase (120), the integrated starter-generator (125) being disposed on an opposite side of the transmission unit (113), the oil pump (150) being mounted on the same side of the integrated starter-generator (125), and the oil pump cover (151) being configured to cover the oil pump (150) exclusively.

10. The power transmission system (111), as claimed in claim 9, wherein one end (117) of a breather hose (116) being connected to an air cleaner (115) and an other end (118) of the breather hose (116) being attached on a cylinder head cover (119) of the engine (112).

11. The power transmission unit (111), as claimed in claim 9, wherein a fan housing (127) being disposed directly on at least a part of the crankcase (120) in proximity of the integrated starter-generator (125).

## Patentansprüche

1. Kraftübertragungssystem (111) für ein Fahrzeug mit Sattelsitz (100), wobei das Kraftübertragungssystem (111) umfasst:
eine Getriebeeinheit (113) mit einem Außengehäuse (132), das fluchtend zu einem Kurbelgehäuse (120) angeordnet ist;
wobei das Außengehäuse (132) mit einer Vielzahl von Abdeckungen (133, 134) ausgebildet ist, die abnehmbar befestigt sind, um das Außengehäuse (132) zu bilden, und
die Vielzahl von Abdeckungen (133, 134) eine erste Abdeckung (133) und eine zweite Abdeckung (134) umfasst, wobei die erste Abdeckung (133) so ausgebildet ist, dass sie eine oder mehrere Komponenten der Getriebeeinheit (113) abdeckt, und die zweite Abdeckung (134) so ausgebildet ist, dass sie eine Kickstarterbaugruppe (135) aufnimmt,
wobei die erste Abdeckung (133) einen Aufnahmeraum (136) zur Aufnahme der zweiten Abdeckung (134) umfasst, wobei eine Innenfläche (138) der ersten Abdeckung (133) einen sich seitlich nach innen erstreckenden Vorsprung (137) aufweist, der den Befestigungsraum (138) umgibt, wobei der sich nach innen erstreckende Vorsprung (137) ein oder mehrere Befestigungsmittel (139) aufweist, die die Befestigung der zweiten Abdeckung (134) an der ersten Abdeckung (133) erleichtern, und
wobei die zweite Abdeckung (134) dazu ausgelegt ist, eine direkte Kraft von der Kickstarterbaugruppe aufzunehmen, die beim Kickstarten erzeugt wird, **dadurch gekennzeichnet, dass** die erste Abdeckung (133) aus einem Kunststoffmaterial besteht und die zweite Abdeckung (134) aus Metall besteht, wobei die zweite Abdeckung (134) dazu ausgelegt ist, eine resultierende Kraft auf die erste Abdeckung (133) zu übertragen.

2. Kraftübertragungssystem (111) nach Anspruch 1, wobei das Kraftübertragungssystem einen Motor (112) umfasst, der zur Erzeugung von Antriebskraft ausgelegt ist, wobei zumindest ein Teil des Motors (112) in einem Kurbelgehäuse (120) angeordnet ist; und wobei die Kickstarterbaugruppe mit dem zumindest einen Teil des Motors (112) gekoppelt ist, der im Kurbelgehäuse (120) angeordnet ist.

3. Kraftübertragungssystem (111) nach Anspruch 1, wobei die erste Abdeckung (133) eine Außenumfangswand (147) umfasst, wobei die Außenumfangswand (147) umfasst:
einen ersten Abschnitt (147a) und einen zweiten Abschnitt (147b), die so konfiguriert sind, dass sie sich überlappen, um dazwischen einen Raum zu lassen, der mindestens einen Luftkanal (148) definiert, der an mindestens einer Stelle ausgebildet ist, wobei der mindestens eine Luftkanal (148) so konfiguriert ist, dass er den Luftstrom innerhalb der Getriebeeinheit (113) erleichtert, und wobei mindestens ein entsprechender Abschnitt, der auf den mindestens einen Luftkanal (148) an dem Kurbelgehäuse (120) ausgebildet ist, um eine seitliche Breite für eine verbesserte Luftzirkulation zu vergrößern.

4. Kraftübertragungssystem (111) nach Anspruch 1, wobei die erste Abdeckung (133) und die zweite Abdeckung (134) koaxial ausgerichtete Öffnungen (141a, 141b) aufweisen, die koaxial zu einer Kickstart-Antriebseinrichtung (144) der Kickstarterbaugruppe (135) ausgerichtet sind, die durch beide Öffnungen (141a, 141b) verläuft und mit einem Kickstarterhebel (142) verbunden ist, um die Bedienung durch den Benutzer zu erleichtern.

5. Kraftübertragungssystem (111) nach Anspruch 4, wobei die Öffnung (141a) an der zweiten Abdeckung (134) vorgesehen ist und die Öffnung (141a) so ausgebildet ist, dass sie ein Ende des Kickstarterhebels (142) aufnimmt.

6. Kraftübertragungssystem (111) nach Anspruch 4, wobei die zweite Abdeckung (134) einen ersten Gehäuseraum (143) zur Aufnahme der Kickstarter-Antriebseinrichtung (144) und einen zweiten Gehäuseraum (145) zur Aufnahme einer Kickstarter-Abtriebseinrichtung (146) umfasst.

7. Kraftübertragungssystem (111) nach Anspruch 6,
wobei die Kickstart-Antriebseinrichtung (146) mit mindestens einem Abschnitt einer Kurbelwelle des Motors (112) gekoppelt ist und eine Mittelachse (ZZ') der Kickstart-Antriebseinrichtung (146) koaxial und parallel zu einer Achse der Kurbelwelle (CC') verläuft; und
wobei das beim Kickstart erzeugte Drehmoment von der Mittelachse (Z-Z') der Kickstart-Antriebseinrichtung (146) auf die Mittelachse (C-C') der Kurbelwelle (124) übertragen wird, so dass ein Reaktionsdrehmoment auf die zweite Abdeckung (134) übertragen wird, was die Beseitigung einer direkten Kraftübertragung auf die erste Abdeckung (133) erleichtert.

8. Kraftübertragungssystem (111) nach Anspruch 1, wobei die Getriebeeinheit (113) ein Kunststoff-Ablaufrohr (149) umfasst, das so ausgebildet ist, dass es einen Einwegfluss des in der Getriebeeinheit (113) angesammelten Wassers ermöglicht.

9. Kraftübertragungssystem (111) nach Anspruch 1, wobei das Kraftübertragungssystem (111) einen Motor (112) und eine Getriebeeinheit (113) umfasst; wobei der Motor (112) umfasst:
ein Kurbelgehäuse (120);
einen integrierten Startergenerator (125);
eine Ölpumpe (150); und
eine Ölpumpenabdeckung (151);
wobei der integrierte Startergenerator (125) direkt an mindestens einem Teil des Kurbelgehäuses (120) angebracht ist, wobei der integrierte Startergenerator (125) auf einer gegenüberliegenden Seite der Getriebeeinheit (113) angeordnet ist, die Ölpumpe (150) auf derselben Seite des integrierten Startergenerators (125) angebracht ist und die Ölpumpenabdeckung (151) so ausgebildet ist, dass sie ausschließlich die Ölpumpe (150) abdeckt.

10. Kraftübertragungssystem (111) nach Anspruch 9, wobei ein Ende (117) eines Entlüftungsschlauchs (116) mit einem Luftfilter (115) verbunden ist und ein anderes Ende (118) des Entlüftungsschlauchs (116) an einem Zylinderkopfdeckel (119) des Motors (112) befestigt ist.

11. Kraftübertragungseinheit (111) nach Anspruch 9, wobei ein Lüftergehäuse (127) direkt an mindestens einem Teil des Kurbelgehäuses (120) in der Nähe des integrierten Startergenerators (125) angeordnet ist.

## Revendications

1. Système de transmission de puissance (111) destiné à un véhicule de type selle (100), le système de transmission de puissance (111) comprenant :
une unité de transmission (113) comprenant un carter extérieur (132) disposé en alignement avec un carter de vilebrequin (120) ;
dans lequel le carter extérieur (132) est configuré avec une pluralité de couvercles (133, 134) fixés de manière amovible pour former le carter extérieur (132), et
la pluralité de couvercles (133, 134) comprenant un premier couvercle (133) et un deuxième couvercle (134), le premier couvercle (133) étant configuré pour recouvrir un ou plusieurs composants de l'unité de transmission (113) et le deuxième couvercle (134) étant configuré pour monter un ensemble de démarrage au pied (135),
dans lequel le premier couvercle (133) comprend un espace de montage (136) destiné à recevoir le deuxième couvercle (134), une surface intérieure (138) du premier couvercle (133) comprenant une saillie (137) s'étendant latéralement vers l'intérieur et entourant l'espace de montage (138), la saillie s'étendant vers l'intérieur (137) comprenant un ou plusieurs moyens de montage (139) facilitant le montage du deuxième couvercle (134) avec le premier couvercle (133), et
dans lequel le deuxième couvercle (134) est adapté pour recevoir une force directe provenant de l'ensemble de démarrage au pied générée lors du démarrage au pied, **caractérisé en ce que** le premier couvercle (133) est constitué d'un matériau en résine, et le deuxième couvercle (134) est constitué de métal, le deuxième couvercle (134) étant adapté pour transférer une force résultante sur le premier couvercle (133).

2. Système de transmission de puissance (111) selon la revendication 1, dans lequel le système de transmission de puissance comprend un moteur (112) configuré pour générer de la puissance de traction, au moins une partie du moteur (112) étant disposée dans un carter (120) ; et l'ensemble de démarrage au pied étant couplé à ladite au moins une partie du moteur (112) disposée dans le carter (120).

3. Système de transmission de puissance (111), selon la revendication 1, dans lequel le premier couvercle (133) comprend une paroi périphérique extérieure (147), la paroi périphérique extérieure (147) comprenant :
une première partie (147a) et une deuxième partie (147b) configurées pour se chevaucher de manière à laisser un espace entre elles définissant au moins un passage d'air (148) formé au moins en un emplacement, dans lequel ledit au moins un passage d'air (148) est configuré pour faciliter la circulation d'air à l'intérieur de l'unité de transmission (113) et, dans lequel au moins une partie correspondante alignée avec ledit au moins un passage d'air (148) étant formée sur le carter (120) afin d'augmenter la largeur latérale pour une circulation d'air accrue.

4. Système de transmission de puissance (111), selon la revendication 1, dans lequel le premier couvercle (133) et le deuxième couvercle (134) comportent des ouvertures (141a, 141b) alignées coaxialement avec un moyen d'entraînement de démarrage au pied (144) de l'ensemble de démarrage au pied (135), lequel passe à travers les deux ouvertures (141a, 141b) et est relié à un levier de démarrage au pied (142) pour faciliter l'utilisation par l'utilisateur.

5. Système de transmission de puissance (111), tel que revendiqué dans la revendication 4, dans lequel l'ouverture (141a) est prévue sur le deuxième couvercle (134), l'ouverture (141a) étant configurée pour recevoir une extrémité du levier de démarrage à pied (142).

6. Système de transmission de puissance (111), selon la revendication 4, dans lequel le deuxième couvercle (134) comprend un premier espace de logement (143) destiné à loger le moyen d'entraînement du démarreur à pied (144), et un deuxième espace de logement (145) destiné à loger un moyen entraîné par le démarreur à pied (146).

7. Système de transmission de puissance (111), selon la revendication 6,
dans lequel le moyen d'entraînement du démarrage au kick (146) est couplé à au moins une partie d'un vilebrequin du moteur (112), et un axe central (ZZ') du moyen d'entraînement du démarrage au kick (146) est coaxial et parallèle à un axe du vilebrequin (CC') ; et,
dans lequel le couple généré lors du démarrage au kick est transféré de l'axe central (Z-Z') du moyen entraîné par le démarrage au kick (146) vers l'axe central (C-C') du vilebrequin (124) de telle sorte qu'un couple de réaction est transféré vers le deuxième couvercle (134), facilitant ainsi l'élimination du transfert direct de contraintes sur le premier couvercle (133).

8. Système de transmission de puissance (111), selon la revendication 1, dans lequel l'unité de transmission (113) comprend un tuyau d'évacuation en résine (149) configuré pour faciliter l'écoulement unidirectionnel de l'eau accumulée dans l'unité de transmission (113).

9. Système de transmission de puissance (111) selon la revendication 1, le système de transmission de puissance (111) comprenant un moteur (112) et une unité de transmission (113) ; le moteur (112) comprenant :
un carter (120) ;
un démarreur-générateur intégré (125) ;
une pompe à huile (150) ; et
un couvercle de pompe à huile (151) ;
dans lequel le démarreur-générateur intégré (125) est monté directement sur au moins une partie du carter (120), le démarreur-générateur intégré (125) étant disposé sur un côté opposé de l'unité de transmission (113), la pompe à huile (150) étant montée sur le même côté que le démarreur-générateur intégré (125), et le couvercle de pompe à huile (151) étant configuré pour recouvrir exclusivement la pompe à huile (150).

10. Système de transmission de puissance (111), selon la revendication 9, dans lequel une extrémité (117) d'un tuyau de reniflard (116) est raccordée à un filtre à air (115) et une autre extrémité (118) du tuyau de reniflard (116) est fixée sur un couvercle de culasse (119) du moteur (112).

11. Unité de transmission de puissance (111), selon la revendication 9, dans laquelle un carter de ventilateur (127) est disposé directement sur au moins une partie du carter (120) à proximité du démarreur-générateur intégré (125).
